# EUROPEAN PATENT APPLICATION

(11) **EP 3 725 595 A1**
(43) Date of publication of application: **21.10.2020**
(21) Application number: 20169517.8
(22) Date of filing: 15.04.2020
(51) Int. Cl.: B60R 16/02, H01R 13/52, H01R 13/629, H01R 13/74

(54) **GROMMET-EQUIPPED CONNECTOR**

(30) Priority: 18.04.2019 JP 2019079207
(71) Applicant: YAZAKI CORPORATION, Minato-ku, Tokyo 108-8333 (JP)
(72) Inventor: ISHIKAWA, Jun, Ohta-ku, Tokyo 143-0016 (JP); OHTAKA, Kazuto, Makinohara-shi, Shizuoka 421-0407 (JP)
(74) Representative: Grünecker Patent- und Rechtsanwälte PartG mbB

(57) **Abstract**

A grommet-equipped connector includes a housing and a grommet. A panel hooking portion, a flange, and a locking projection are formed on an outer side of the housing. The grommet includes a panel close contact portion. The panel close contact portion has a waterproof lip which is brought into close contact with an edge portion of a mounting hole of a panel. A guide rib is provided at a position of the panel close contact portion facing the panel hooking portion. The guide rib is brought into contact with a wall surface of the panel before the waterproof lip is brought into contact with the wall surface at the time of assembling the housing to the panel.

## Description

### TECHNICAL FIELD

The present invention relates to a grommet-equipped connector.

### BACKGROUND

A grommet-equipped connector assembled to a vehicle panel of an automobile is disclosed in JP 2003-9369 A, for example.

The grommet-equipped connector includes a connector housing (housing), an inner sleeve, and a grommet. The connector housing is fixed to the inside of the inner sleeve. The inner sleeve is housed in the grommet.

In the grommet-equipped connector, the connector housing is assembled to a vehicle body panel (panel) through a through hole (mounting hole) formed in the vehicle body panel while inclining the connector housing with respect to the vehicle body panel. When such assembling is performed, a waterproof lip of the grommet is simultaneously pressed against the vehicle body panel so as to stop the invasion of water into the vehicle body through the through hole formed in the vehicle body panel.

### SUMMARY

However, in a case where the waterproof lip of the grommet is caught in the through-hole side of the vehicle body panel when the connector housing is assembled to the vehicle body panel while inclining the connector housing with respect to the vehicle body panel, the waterproof lip cannot be normally pressed against the vehicle body panel. In this case, the waterproofness of the through hole of the vehicle body panel cannot be obtained and hence, there is a possibility that water enters the vehicle body and short-circuiting occurs.

The present invention has been made to overcome the above-described problems, and it is an object of the present invention to provide a grommet-equipped connector that can prevent a waterproof lip of a grommet from being caught in a mounting hole of a panel at the time of assembling a housing on the panel while inclining the housing with respect to the panel, thus ensuring assembling property of the housing and waterproofness of the mounting hole of the panel by the grommet.

According to the present invention, there is provided a grommet-equipped connector including: a housing including a panel hooking portion which is locked to an edge portion of a mounting hole of a panel by being hooked on the edge portion, a flange having an annular shape which faces the edge portion, and a locking projection which is locked to the panel in a state where the panel is sandwiched between the locking projection and the flange, wherein the panel hooking portion, the flange, and the locking projection are formed on an outer side of the housing; and a grommet including a panel close contact portion which engages with the flange by fitting so as to cover the flange and has a waterproof lip which is brought into close contact with the edge portion, wherein a guide rib projecting from the waterproof lip, is provided at a position of the panel close contact portion facing the panel hooking portion, and the guide rib is configured to be brought into contact with a wall surface of the panel before the waterproof lip is brought into contact with the wall surface at the time of assembling the housing to the panel, by rotating the housing using the panel hooking portion as a fulcrum in a state where the panel hooking portion is hooked on the edge portion.

According to the present invention, by preventing the waterproof lip of the grommet from being caught in the mounting hole of the panel at the time of assembling the housing to the panel while inclining the housing with respect to the panel, it is possible to ensure the assembling property of the housing and the waterproofness of the mounting hole of the panel by the grommet.

### BRIEF DESCRIPTION OF THE DRAWINGS

FIG. 1 is a perspective view illustrating a state of a lever-type connector according to one embodiment of the present invention before fitting engagement;
FIG. 2 is a perspective view of a male connector of the lever-type connector:
FIG. 3 is a perspective view of a lever of the lever-type connector;
FIG. 4 is a side view of the male connector at the time of temporary setting releasing;
FIG. 5 is an enlarged view of a Y-portion in FIG. 4;
FIG. 6 is a bottom view of the male connector at the time of temporary setting releasing;
FIG. 7 is a plan view of the male connector at the time of temporary setting releasing;
FIG. 8 is a perspective view of a frame of a female connector of the lever-type connector;
FIG. 9 is an enlarged side view of a main part of the frame;
FIG. 10 is a perspective view of a grommet to be mounted on a flange of the frame;
FIG. 11 is a side view illustrating a state before the lever-type connector is temporarily set;
FIG. 12A is a side view of the lever-type connector in a temporary setting state at the time of starting rotation of the lever;
FIG. 12B is a cross-sectional view taken along line X-X in FIG. 12A;
FIG. 13A is a side view illustrating a state where the rotation of the lever of the lever-type connector is completed;
FIG. 13B is a schematic cross-sectional view taken along line X-X in FIG. 13A;
FIG. 14 is a side view of the lever-type connector in a state where sliding of the lever of the lever-type connector is completed;
FIG. 15 is a side view of the lever-type connector in a state where the lever-type connector passes through a mounting hole formed in a vehicle body panel;
FIG. 16 is a perspective view of the lever-type connector in a state where the lever-type connector passes through the mounting hole formed in the vehicle body panel;
FIG. 17 is a side view of the lever-type connector illustrating a state where a panel hooking portion of the lever-type connector is inserted into the mounting hole formed in the vehicle body panel;
FIG. 18A is a side view of the lever-type connector in a state where the panel hooking portion of the lever-type connector is hooked on an edge portion of the mounting hole formed in the vehicle body panel;
FIG. 18B is an explanatory view of a case where there is no guide rib;
FIG. 19 is a perspective view of the lever-type connector illustrating a state where the panel hooking portion is not hooked on the edge portion of the mounting hole formed in the vehicle body panel;
FIG. 20 is a side view of the lever-type connector illustrating a state where the lever-type connector is assembled to the vehicle body panel;
FIG. 21 is a cross-sectional view of the lever-type connector taken along line X-X in FIG. 20;
FIG. 22 is a cross-sectional view of a grommet-equipped connector according to a comparison example; and
FIG. 23 is a cross-sectional view of the grommet-equipped connector according to the comparison example in the way of assembling the grommet-equipped connector.

### DETAILED DESCRIPTION

Hereinafter, an embodiment of the present invention will be described with reference to drawings.

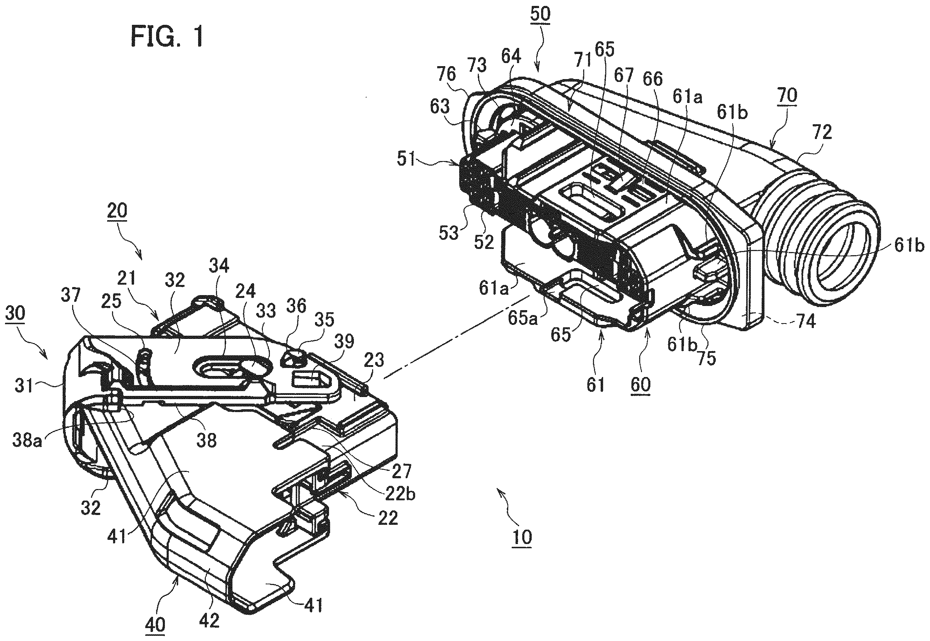

One embodiment of the present invention will be described with reference to FIGS. 1 to 21.

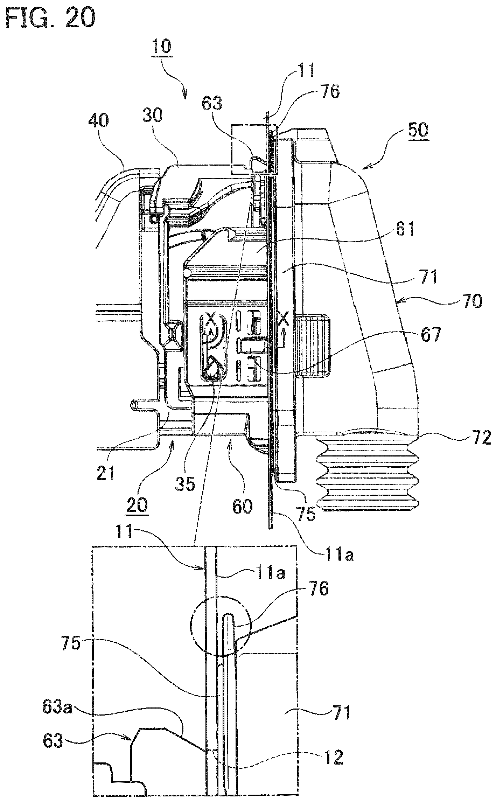

As illustrated in FIGS. 1 and 20. a lever-type connector 10 includes a male connector 20 and a female connector (grommet-equipped connector) 50. The male connector 20 is disposed on an inner side of a vehicle body panel (panel) 11 (a side opposite to a door side). The female connector 50 is disposed on an outer side of the vehicle body panel 11 (door side).

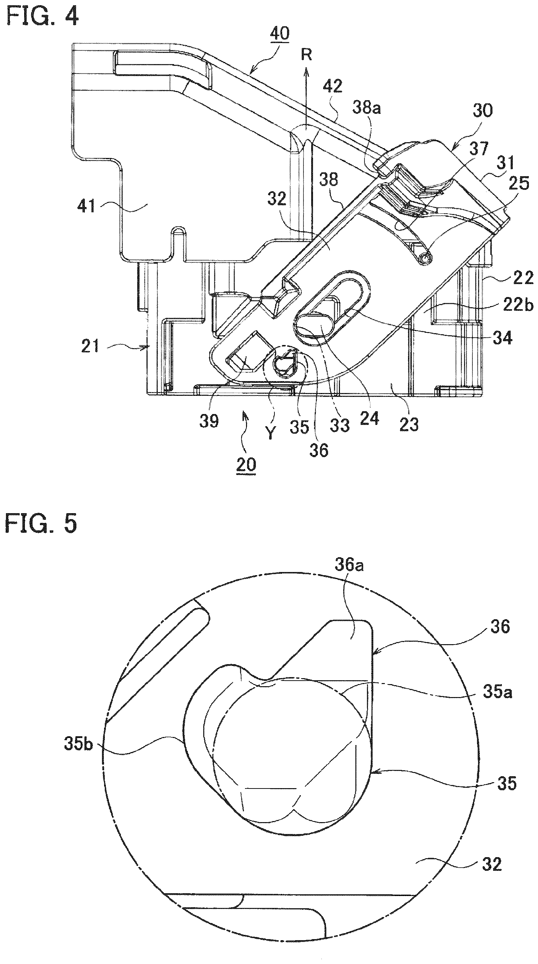

As illustrated in FIGS. 1, 4, and 6, the male connector 20 includes a male housing 21 made of a synthetic resin, a lever 30 made of a synthetic resin, and a cable cover 40 made of a synthetic resin. The male housing 21 houses a plurality of male terminals (terminals) not illustrated in the drawing, and engages with a female housing 51 of the female connector 50 by fitting in a detachable manner. The lever 30 is rotatably supported on the male housing 21 by way of support shafts 24, 24 (only the support shaft 24 on one side is illustrated in FIGS. 1 and 4). The lever 30 is also slidably supported on the male housing 21. Due to the rotational manipulation of the lever 30, the male housing 21 and the female housing 51 engage with each other by fitting or are disengaged from each other. The cable cover 40 is mounted on the male housing 21 so as to cover a rear side of the male housing 21 (a side opposite to a side where the male connector 20 opposedly faces the female connector 50).

As illustrated in FIGS. 1, 2, and 6, the male housing 21 has a housing body 22 having a rectangular block shape and a hood portion 23. The housing body 22 has a plurality of terminal housing holes 22a in which male terminals are housed. The hood portion 23 is integrally formed on a front side of the housing body 22 (a side where the male connector 20 opposedly faces the female connector 50) in a protruding manner. A housing body 52 of the female housing 51 is fitted in the hood portion 23. The support shafts 24, 24 which extend in a direction perpendicular to a fitting direction of the connector, are respectively integrally formed on boundaries between the centers of both side surfaces 22b, 22b of the housing body 22 and the hood portion 23 in a protruding manner. The support shafts 24, 24 are rotary shafts of the lever 30.

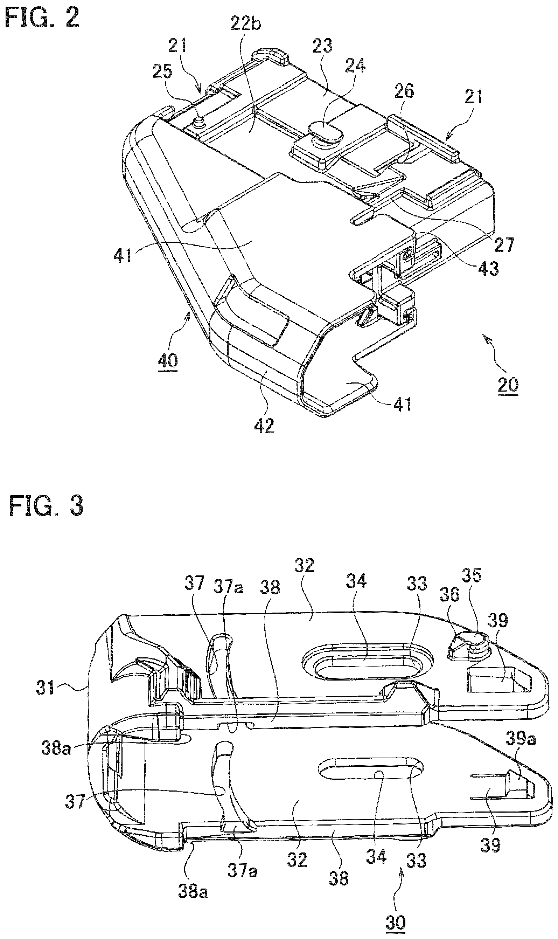

Guide projections 25, 25 are respectively integrally formed on a rear side of both side surfaces 22b, 22b of the housing body 22 (a side opposite to a side where the male connector 20 opposedly faces the female connector 50), and at a position close to a manipulating portion 31 of the lever 30 described later, in a protruding manner. As illustrated in FIG. 2, temporary locking recessed portions (portions to be temporarily locked) 26, 26 and main locking recessed portions (portions to be mainly locked) 27, 27 are respectively formed on the hood portion 23 and both side surfaces 22b, 22b of the housing body 22. at positions corresponding to rotational trajectories of projection portions 39a, 39a of locking arms (locking portions) 39, 39 of the lever 30 described later.

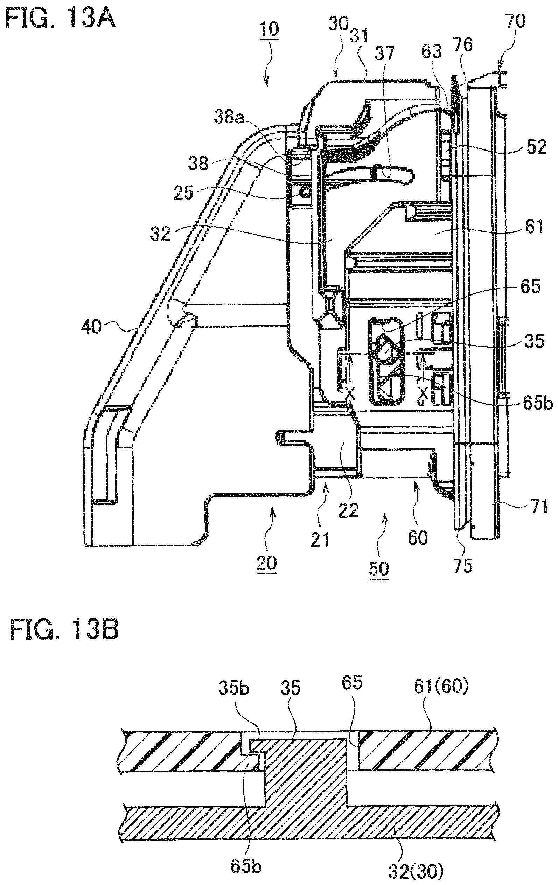

As illustrated in FIGS. 1, 3, and 4, the lever 30 is mounted on the male housing 21 such that the lever 30 covers a part of the male housing 21 of the male connector 20 and a part of the cable cover 40. Due to a rotational manipulation of the lever 30 from a lever rotation start position illustrated in FIG. 12A to a lever rotation completion position illustrated in FIG. 13A. the male connector 20 and the female connector 50 are pulled close to each other and hence, the male connector 20 and the female connector 50 engage with each other by fitting. The lever 30 includes the manipulating portion 31, and a pair of arm portions 32, 32 which extends from both sides of the manipulating portion 31.

As illustrated in FIGS. 1. 3, and 4, a bearing hole (bearing portion) 33 is formed at the center of each arm portion 32 of the lever 30. The bearing hole 33 has a shaft slide groove 34 in which the support shaft 24 slides. A cam boss 35 having a columnar shape is integrally formed on each arm portion 32 in a protruding manner.

As illustrated in FIGS. 4 to 7, a projection 36 having a tapered portion 36a is integrally formed on an outer side of the cam boss 35 in a temporary setting releasing direction (connector removing direction) R, in a protruding manner. In making the male connector 20 and the female connector 50 engage with each other by fitting, the tapered portion 36a obliquely faces a surface of a temporary locking projection 65a of a cam groove 65 described later on a temporary setting releasing direction R side. Further, as illustrated in FIGS. 5 and 13B, a position restricting rib 35b which engages with a pull-in rib 65b of the cam groove 65, is integrally formed on an upper end of a shaft portion 35a of the cam boss 35 in a protruding manner.

As illustrated in FIG. 3, an arcuate guide groove 37 with which the guide projection 25 engages, is formed in each arm portion 32 between the manipulating portion 31 and the bearing hole 33. The guide groove 37 is formed in an elongated arcuate shape having its center at the bearing hole 33. A catching taper 37a which guides the guide projection 25, is formed on an open end side of the guide groove 37.

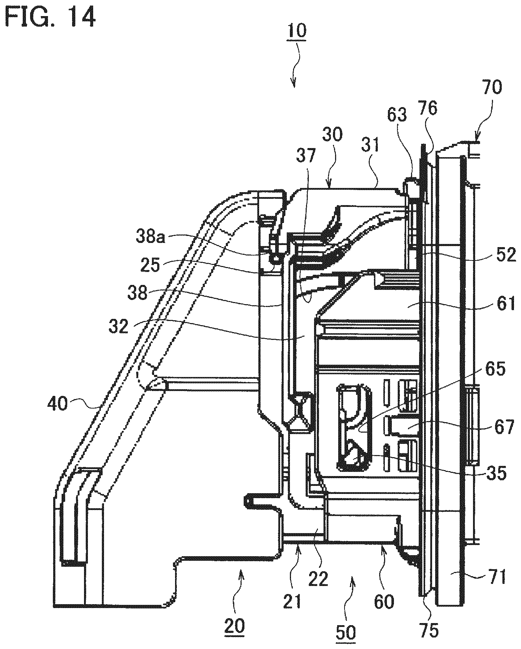

As illustrated in FIG. 3, a slide portion 38 along which the guide projection 25 slides in a slide direction after rotation of the lever 30, is formed on each arm portion 32 of the lever 30. The slide portion 38 is formed in a rail shape such that an inner side of the slide portion 38 is indented. Further, a contact portion 38a is formed on each arm portion 32. The guide projection 25 is brought into contact with the contact portion 38a at end of sliding of the guide projection 25 after rotation of the lever 30. Due to the rotational manipulation of the lever 30, the guide projection 25 slides in the guide groove 37, and after the fitting engagement between the male connector 20 and the female connector 50 is completed, the guide projection 25 slides along the slide portion 38 until the guide projection 25 is brought into contact with the contact portion 38a. With such a configuration, as illustrated in FIGS. 13A and 14, the lever 30 can slide relative to the housing body 22 of the male housing 21.

As illustrated in FIGS. 1 and 3, the locking arm (locking portion) 39 which elastically deforms in a direction perpendicular to a fitting direction of the housing, is formed on an outer side of a distal end of each arm portion 32 of the lever 30. A projection portion 39a of the locking arm 39 is locked to or removed from the temporary locking recessed portion 26 or the main locking recessed portion 27. With such a configuration, the locking arm 39 makes the lever 30 locked to or removed from the temporary locking recessed portion 26 or the main locking recessed portion 27.

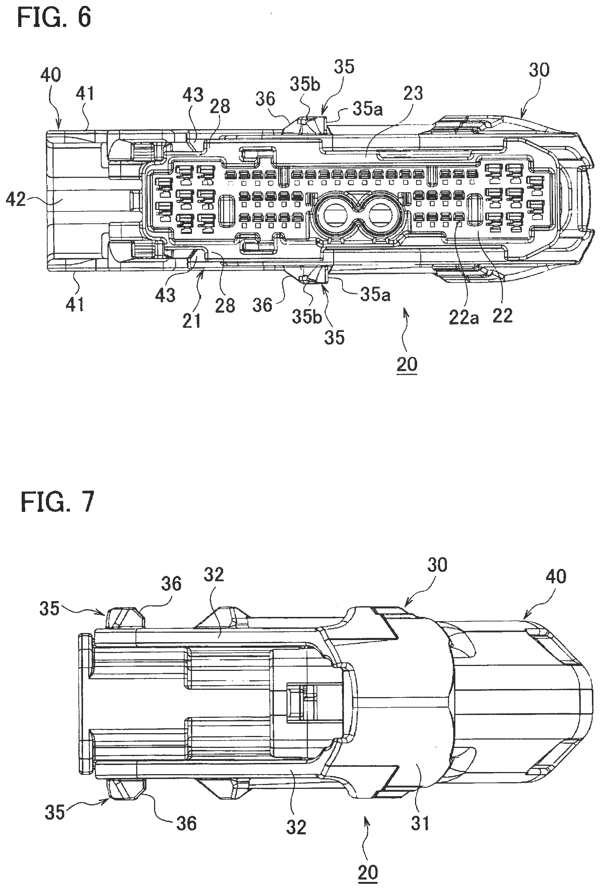

As illustrated in FIGS. 1 and 2, the cable cover 40 has a pair of side wall portions 41, 41 which forms an opening, and a ceiling wall portion 42 having a curved surface shape and a bent shape. As illustrated in FIG. 6, when the cable cover 40 is slid and mounted on a rear end side of the housing body 22 of the male housing 21 (an end portion of the housing body 22 on a side opposite to a side where the male connector 20 opposedly faces the female connector 50), locking portions 43, 43 formed on lower ends of the side wall portions 41, 41 are locked to portions-to-be-locked 28, 28 formed on the housing body 22.

As illustrated in FIG. 1, the female connector 50 equipped with a grommet includes the female housing 51 and a grommet 70 made of rubber. The female housing 51 has a plurality of terminal housing chambers 53 in which female terminals (terminals) not illustrated in the drawings are housed. The female housing 51 includes the housing body 52 made of a synthetic resin and a cylindrical frame 60 made of a synthetic resin. The housing body 52 is configured to engage with the male housing 21 of the male connector 20 by fitting and to be removed from the male housing 21. The frame 60 is fitted on an outer circumference of the housing body 52 exteriorly, and is locked to the mounting hole 12 formed in the vehicle body panel 11. The grommet 70 is mounted on a flange 62 of the frame 60.

As illustrated in FIG. 1, the housing body 52 has the plurality of terminal housing chambers 53 in which the female terminals are housed, and the housing body 52 is formed in a rectangular block shape. Release projections (release portions) not illustrated in the drawings, are formed on both side surfaces of the housing body 52 at positions where the releasing projections opposedly face the temporary locking recessed portions 26, 26 formed on both side surfaces 22b, 22b of the male housing 21. The releasing projections release a temporary locked state between the projection portions 39a. 39a of the locking arms 39, 39 of the lever 30 and the temporary locking recessed portions 26, 26.

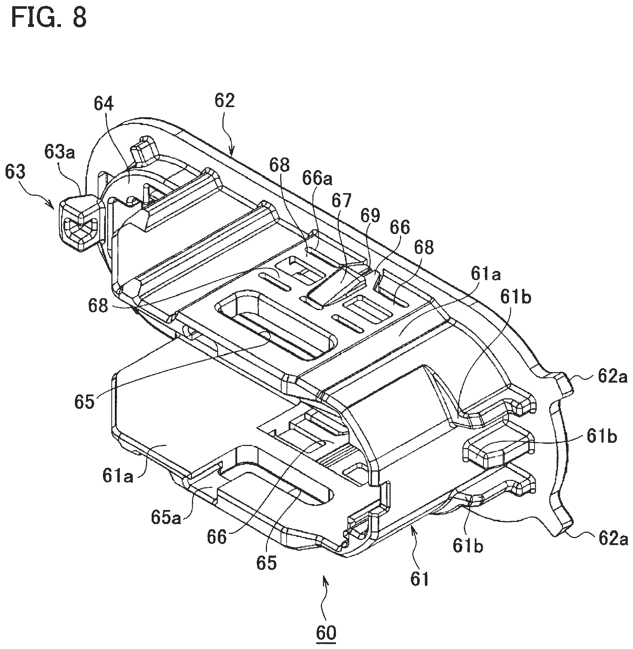

As illustrated in FIG. 8, the frame 60 has a cylindrical frame body 61 where an upper surface side is cut away, and the flange 62 having an annular plate shape. The flange 62 is integrally formed on one end side of the frame body 61 over the entire circumference of the frame body 61 in a protruding manner toward the outside. In mounting the female connector 50 on the vehicle body panel 11. the flange 62 opposedly faces an edge portion 12a of the mounting hole 12 of the vehicle body panel 11.

A panel hooking portion 63 is formed on an upper side of the frame body 61. The panel hooking portion 63 is locked to the edge portion 12a of the mounting hole 12 by hooking. By rotating the female housing 51 using the panel hooking portion 63 as a fulcrum in a state where the panel hooking portion 63 is hooked on the edge portion 12a of the mounting hole 12, it is possible to make locking projections 67. 67 described later locked to the mounting hole 12. A catching taper 63a is formed on a flange 62 side of the panel hooking portion 63.

As illustrated in FIGS. 1 and 8, a locking frame portion 64 is formed on a lower side of the panel hooking portion 63 of the frame body 61. The locking frame portion 64 locks the housing body 52 of the female housing 51 arranged in both side wall portions 61a, 61a of the frame body 61 with a gap. A plurality of butting portions 61b is formed on a lower side of the frame body 61. The butting portions 61b are brought into contact with the vehicle body panel 11 when the locking projections 67, 67 described later are not correctly locked to the mounting hole 12 of the vehicle body panel 11. The hood portion 23 of the housing body 22 of the male housing 21 is fitted in between the housing body 52 of the female housing 51 and the cylindrical frame body 61 of the frame 60. A pair of projection portions 62a, 62a is integrally formed on an outer side of the flange 62 of the frame 60 in a protruding manner at positions where the projection portions 62a, 62a opposedly face the butting portions 61b, 61b positioned on both end sides among the plurality of butting portions 61b. The projection portions 62a, 62a are inserted into a deep groove portion 74 formed on a deep side of a flange fitting groove 73 of the grommet 70 described later in a non-penetrating manner.

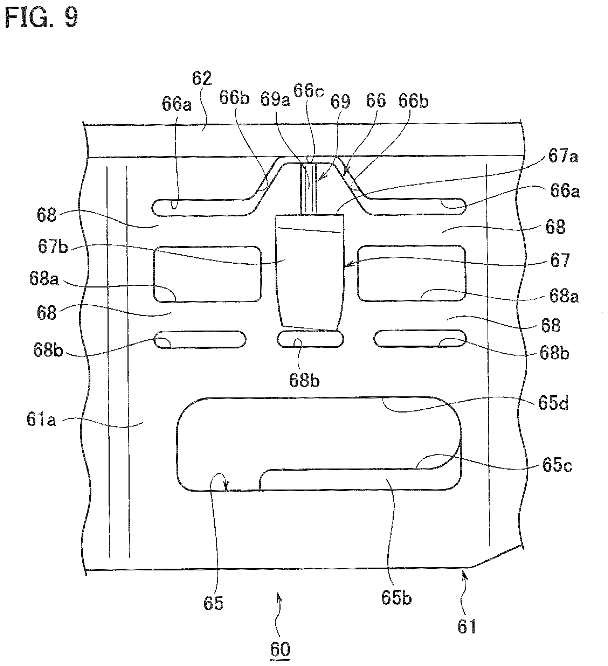

As illustrated in FIGS. 8 and 9, cam grooves 65, 65 with which the cam bosses 35, 35 of the lever 30 engage, are formed on the centers of both side wall portions 61a, 61a of the frame body 61 on a side opposite to the flange 62. Each cam groove 65 has the temporary locking projection 65a. the pull-in rib 65b and a pushing-side slide surface 65d. The temporary locking projection 65a is disposed on an inlet side of the cam groove 65. A pull-in side slide surface 65c which extends from the temporary locking projection 65a in an L shape, is formed on the pull-in rib 65b. The pushing-side slide surface 65d opposedly faces the pull-in side slide surface 65c of the pull-in rib 65b.

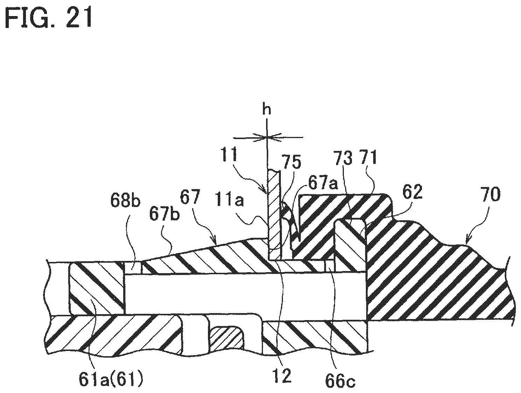

As illustrated in FIG. 9, resilient arms 66, 66 which are elastically deformable are respectively integrally formed on the centers of both side wall portions 61a, 61a of the frame body 61 at a position close to the flange 62. Each resilient arm 66 is supported on the side wall portion 61a in a cantilever manner by forming straight-line slits 66a, 66a which are positioned on both left and right sides of the resilient arm 66, inclined slits 66b, 66b which communicate with the straight-line slits 66a, 66a, and a center slit 66c which communicates with the inclined slits 66b, 66b. As illustrated in FIG. 21, each locking projection 67 is integrally formed on the center of each resilient arm 66 in a protruding manner. The locking projections 67. 67 are locked to the vehicle body panel 11 in a state where the vehicle body panel 11 is sandwiched between the locking projections 67, 67 and the flange 62 by way of a waterproof lip 75 of the grommet 70 described later. Each locking projection 67 has: a vertical locking surface 67a which is locked to the edge portion 12a of the mounting hole 12 of the vehicle body panel 11; and an inclined surface (tapered surface) 67b which guides the locking projection 67 into the mounting hole 12. The inclined surface 67b is formed such that the vehicle body panel 11 and the locking projection 67 are brought into contact with each other at a right angle even when the female housing 51 is inclined at the time of assembling the locking projection 67 into the mounting hole 12.

As illustrated in FIG. 9, a pair of auxiliary arms 68, 68 extending in a direction orthogonal to the resilient arm 66 is formed on both sides of the locking projection 67 of the resilient arm 66 by way of cutouts 68a. 68a and slits 68b. 68b having a rectangular shape respectively. A release portion 69 is formed between the locking projection 67 of the resilient arm 66 and the slit 66c. The release portion 69 is operated by a release jig (not illustrated in the drawings) inserted along the flange 62. A recessed groove 69a with which a distal end of the release jig is brought into contact, is formed on the release portion 69.

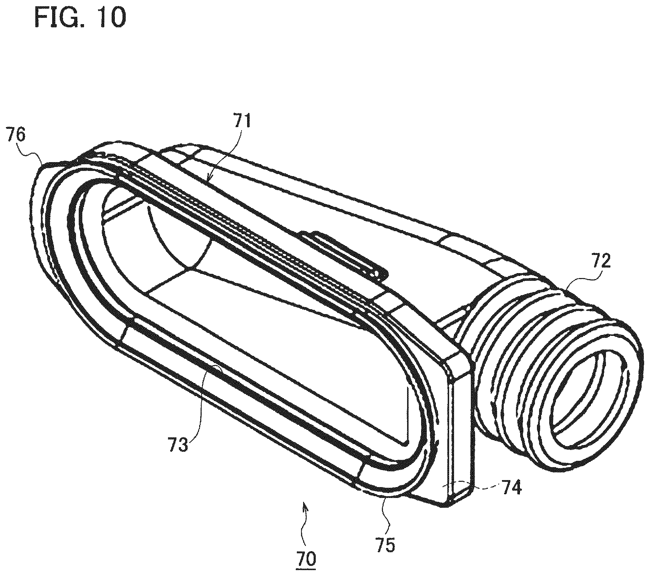

As illustrated in FIGS. 1 and 10, the grommet 70 includes a panel close contact portion 71 and a cable accommodating portion 72. The panel close contact portion 71 is fitted on the flange 62 so as to cover the flange 62. In mounting the female connector 50 on the vehicle body panel 11, the panel close contact portion 71 is brought into close contact with the edge portion 12a of the mounting hole 12 of the vehicle body panel 11.

As illustrated in FIG. 10, a flange fitting groove 73 is formed on an inner side of the panel close contact portion 71. The flange 62 is inserted into the flange fitting groove 73 over the entire circumference of the flange 62. The deep groove portion 74 is formed on a lower side of the flange fitting groove 73. The projection portions 62a, 62a of the flange 62 are inserted into the deep groove portion 74 in a non-penetrating manner. The waterproof lip 75 is integrally formed on an outer side of the panel close contact portion 71. In mounting the female connector 50 on the vehicle body panel 11, the waterproof lip 75 is pressed against a wall surface 11a of the vehicle body panel 11 around the edge portion 12a of the mounting hole 12 and hence, and the waterproof lip 75 is brought into close contact with the edge portion 12a.

A guide rib 76 which protrudes from a part of the waterproof lip 75. is integrally formed on the waterproof lip 75 in a tongue shape in a protruding manner at a position of the panel close contact portion 71 opposedly facing the panel hooking portion 63 of the frame 60. The guide rib 76 protrudes from the waterproof lip 75 toward the outside of the waterproof lip 75 (see FIGS. 10, 17 and 18A). The guide rib 76 is brought into contact with the wall surface 11a of the vehicle body panel 11 prior to the waterproof lip 75 at the time of assembling the female housing 51 to the vehicle body panel 11. After the female housing 51 is assembled to the vehicle body panel 11, the guide rib 76 is separated from the wall surface 11a of the vehicle body panel 11 and is not brought into contact with the wall surface 11a, and the waterproof lip 75 is pressed against the wall surface 11a of the vehicle body panel 11 and is brought into close contact with the wall surface 11a.

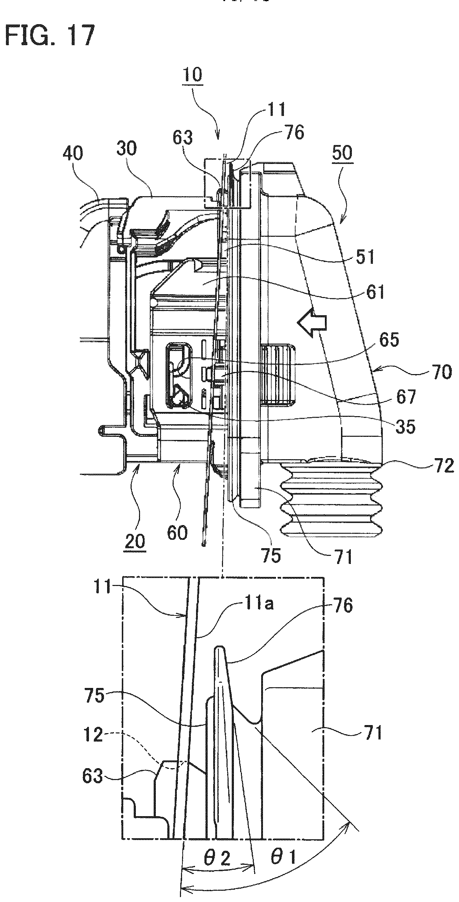

As illustrated in FIG. 17, a contact angle between the waterproof lip 75 and the vehicle body panel 11 (an angle formed by the waterproof lip 75 and the vehicle body panel 11 when the waterproof lip 75 starts to contact the vehicle body panel 11) θ1 is larger than a contact angle between the guide rib 76 and the vehicle body panel 11 (an angle formed by the guide rib 76 and the vehicle body panel 11 when the guide rib 76 starts to contact the vehicle body panel 11) θ2 (θ1> θ2).

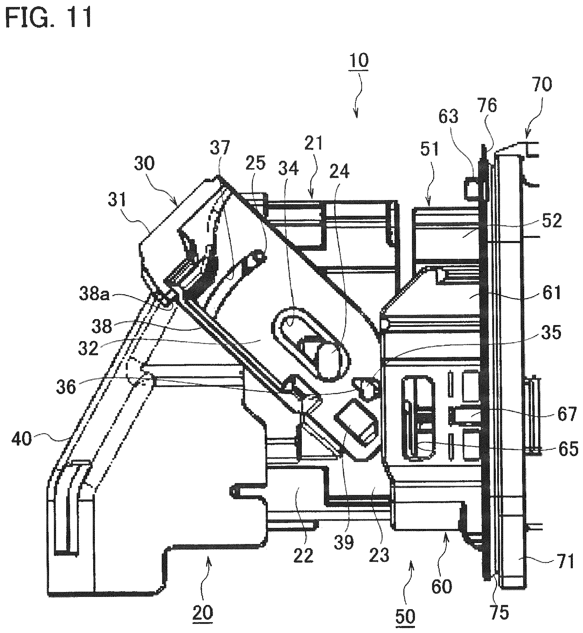

As has been described above, according to the lever-type connector 10 of the embodiment, before the lever-type connector 10 is assembled to the mounting hole 12 of the vehicle body panel 11 (before the lever-type connector 10 is temporarily set), as illustrated in FIGS. 4 and 11 (it is noted that FIG. 11 illustrates one sides of the male connector 20 and female connector 50), the temporary locked state of the lever 30 is held by assembling the bearing holes 33, 33 formed in the lever 30 and having the shaft slide grooves 34, 34 to the support shafts 24, 24 of the male housing 21 of the male connector 20, and by temporarily locking the projection portions 39a, 39a of the locking arms 39, 39 of the lever 30 to the temporary locking recessed portions 26, 26 of the male housing 21. When the lever 30 is in the temporary locked state with respect to the male housing 21, the lever 30 cannot be rotated in the fitting direction of the male housing 21 and the female housing 51 of the female connector 50.

When the housing body 52 of the female housing 51 is pushed into the hood portion 23 of the male housing 21 in the temporary locked state of the lever 30, the release projections (not illustrated in the drawings) of the housing body 52 elastically deform the locking arms 39, 39 of the lever 30 to the outside. As a result, the temporary locked state of the temporary locking recessed portions 26, 26 of the male housing 21 and the projection portions 39a, 39a of the locking arm 39, 39 of the lever 30 is released and hence, the lever 30 can rotate in the fitting direction of the male housing 21 and the female housing 51.

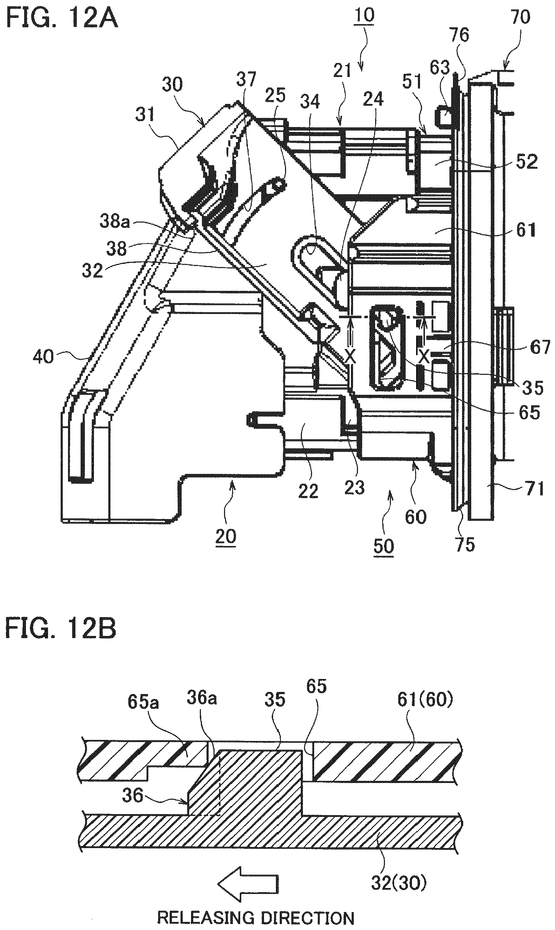

Next, as illustrated in FIG. 12A (it is noted that FIG. 12A illustrates one sides of the male connector 20 and female connector 50), the male housing 21 and the female housing 51 are made to face each other, and the cam bosses 35, 35 of the lever 30 are inserted into the cam grooves 65, 65 of the frame 60 of the female connector 50 so that the cam bosses 35, 35 are locked to the temporary locking projections 65a, 65a formed at the inlets of the cam grooves 65, 65. When the cam bosses 35, 35 of the lever 30 are locked to the temporary locking projections 65a, 65a of the cam grooves 65, 65, the male housing 21 of the male connector 20 and the female housing 51 of the female connector 50 are brought into a temporary set state. As illustrated in FIG. 12B, in releasing a temporary setting state, the male housing 21 is pulled out from the female housing 51 (the male housing 21 being pulled out in a temporary setting releasing direction R illustrated in FIG. 4) so that the tapered portions 36a, 36a of the projections 36, 36 formed on the outer side of the cam bosses 35, 35 slide on the temporary locking projections 65a, 65a of the cam grooves 65, 65. Accordingly, the male connector 20 is smoothly detached from the female connector 50.

Next, as illustrated in FIG. 13A (it is noted that FIG. 13A illustrates one sides of the male connector 20 and female connector 50), the lever 30 is rotated using the support shafts 24, 24 of the male housing 21 as rotary shafts and hence, the shaft portions 35a, 35a of the cam bosses 35, 35 are brought into contact with the pull-in side slide surfaces 65c, 65c of the cam grooves 65, 65 whereby the female housing 51 is pulled in. In such a pull in operation of the female housing 51, the position restricting ribs 35b, 35b of the cam bosses 35, 35 are brought into contact with the pull-in ribs 65b, 65b of the cam grooves 65, 65 and hence, a contact between the shaft portions 35a. 35a of the cam bosses 35, 35 and the pull-in side slide surfaces 65c, 65c of the cam grooves 65, 65 is maintained.

In such an operation, in a state where the support shafts 24, 24 of the male housing 21 are brought into slide contact with the bearing holes 33, 33 of the lever 30, the guide projections 25, 25 of the male housing 21 move along the arcuate guide grooves 37, 37 formed in the lever 30 and hence, the lever 30 is rotated.

Next, as illustrated in FIG. 13A, when the rotation of the lever 30 is completed, the lever 30 is slidable relative to the male housing 21. That is, when the rotation of the lever 30 is finished, the guide projections 25, 25 of the male housing 21 are removed from the catching tapers 37a, 37a formed on open ends of the arcuate guide grooves 37, 37 of the lever 30 and hence, the lever 30 is slidable relative to the male housing 21.

Then, as illustrated in FIG. 14 (it is noted that FIG. 14 illustrates one sides of the male connector 20 and female connector 50), by pushing the manipulating portion 31 of the lever 30, the lever 30 is slid along the guide projections 25, 25 of the male housing 21 and hence, the projection portions 39a, 39a of the locking arms 39, 39 of the lever 30 are locked to the main locking recessed portions 27, 27 of the male housing 21. In this case, the lever 30 assumes a main locked state with respect to the male housing 21. In sliding the lever 30, the support shafts 24, 24 of the male housing 21 are brought into slide contact with the shaft slide grooves 34, 34 of the lever 30. Due to sliding of the lever 30, the lever 30 is inserted into the frame 60 of the female housing 51 and hence, the fitting engagement between the male housing 21 and the female housing 51 is completed.

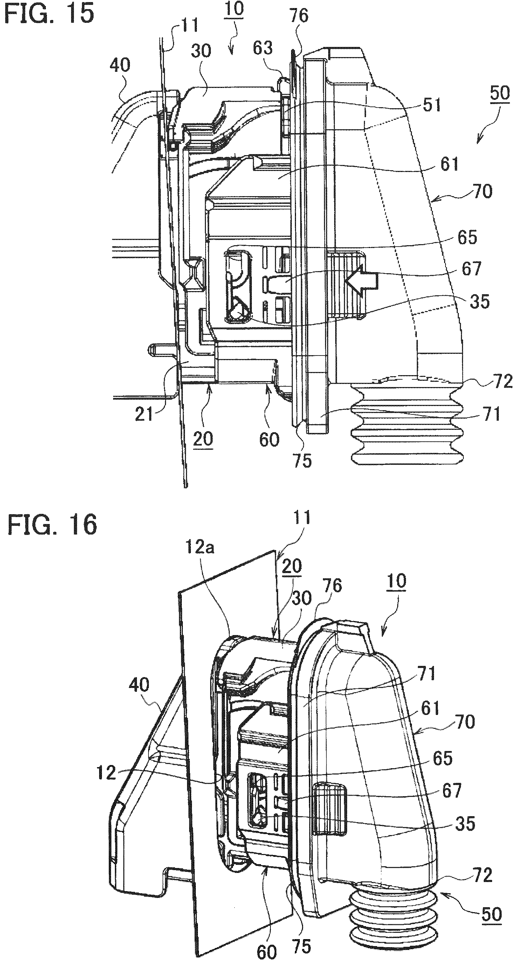

Next, a procedure for assembling the lever-type connector 10 where the male connector 20 and the female connector 50 engage with each other by fitting to the mounting hole 12 of the vehicle body panel 11, will be described with reference to FIGS. 15 to 20.

As illustrated in FIGS. 15 and 16, the male connector 20 which engages with the female connector 50 by fitting, is made to penetrate the mounting hole 12 of the vehicle body panel 11 from a door panel side.

Next, as illustrated in FIG. 17, insertion of the panel hooking portion 63 of the frame 60 of the female connector 50 into the mounting hole 12 of the vehicle body panel 11 is started.

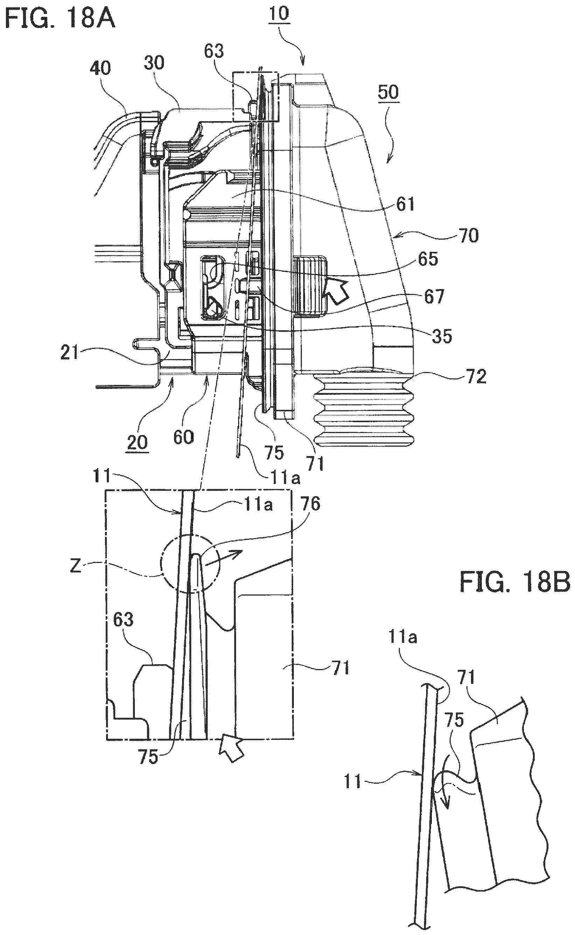

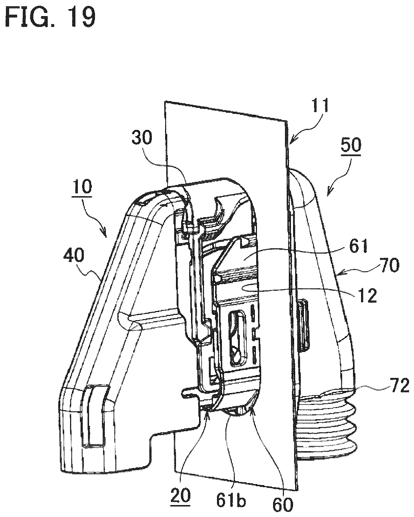

As illustrated in FIG. 18A. by further inserting the panel hooking portion 63 of the frame 60 into the mounting hole 12 of the vehicle body panel 11, the panel hooking portion 63 is locked to the edge portion 12a in a state where the panel hooking portion 63 is hooked on the edge portion 12a of the mounting hole 12. As illustrated in FIG. 19, in a state where the panel hooking portion 63 is not hooked on the edge portion 12a of the mounting hole 12, the butting portions 61b of the frame 60 are brought into contact with the wall surface 11a of the vehicle body panel 11 and hence, the locking projections 67, 67 of the frame 60 are not locked to the edge portion 12a of the mounting hole 12 of the vehicle body panel 11.

As illustrated in FIGS. 18A and 20, by rotating the female housing 51 using the panel hooking portion 63 of the frame 60 as a fulcrum in a state where the panel hooking portion 63 of the frame 60 is hooked on the edge portion 12a of the mounting hole 12 of the vehicle body panel 11, the inclined surfaces 67b, 67b of the locking projections 67, 67 of the frame 60 are brought into contact with the edge portion 12a of the mounting hole 12. Further, the resilient arms 66. 66 in which the locking projections 67, 67 are formed, are resiliently bent and hence, the locking projections 67. 67 of the frame 60 are locked to the mounting hole 12 of the vehicle body panel 11. In such an operation, as illustrated in FIG. 21, each locking projection 67 moves in a direction perpendicular to the vehicle body panel 11 and hence, after the locking projection 67 is locked, a clearance h between the locking surface 67a of the locking projection 67 and the wall surface 11a of the vehicle body panel 11 is small. Accordingly, the waterproof lip 75 of the grommet 70 can be pushed to the wall surface 11a of the vehicle body panel 11 without forming a gap and hence, intrusion of water from the mounting hole 12 of the vehicle body panel 11 can be prevented.

In the present embodiment, as illustrated in FIG. 18A, at the time of assembling the grommet-equipped female housing 51 to the vehicle body panel 11, the guide rib 76 of the grommet 70 is brought into contact with the wall surface 11a of the vehicle body panel 11 before the waterproof lip 75 of the panel close contact portion 71 is brought into contact with the wall surface 11a, and is displaced in a catching preventing direction (toward a side opposite to the mounting hole 12 of the vehicle body panel 11). With the displacement of the guide rib 76 in the catching preventing direction, the waterproof lip 75 is also displaced in the catching preventing direction. Accordingly, it is possible to prevent the waterproof lip 75 from being caught in the mounting hole 12 side of the vehicle body panel 11.

As illustrated in FIG. 18B, when the guide rib 76 is not provided, the waterproof lip 75 may be displaced in the catching direction (toward the mounting hole 12 side of the vehicle body panel 11). On the other hand, in the present embodiment, the guide rib 76 is provided and hence, it is possible to prevent the waterproof lip 75 from being caught in the mounting hole 12 of the vehicle body panel 11. As a result, as illustrated in FIG. 20, when the female housing 51 is assembled to the mounting hole 12 of the vehicle body panel 11, the waterproof lip 75 is brought into close contact with the wall surface 11a of the vehicle body panel 11 so that the waterproofness of the mounting hole 12 can be obtained. At this time, the guide rib 76 docs not press the wall surface 11a of the vehicle body panel 11, that is, the guide rib 76 is not brought into contact with the wall surface 11a. Accordingly, the existence of the guide rib 76 does not influence the waterproofness by the waterproof lip 75. Due to the presence or absence of a gap between the wall surface 11a of the vehicle body panel 11 and the guide rib 76, it is possible to confirm whether the waterproof lip 75 is at a proper position with respect to the wall surface 11a of the vehicle body panel 11.

In this manner, at the time of assembling the female housing 51 of the grommet-equipped female connector 50 to the mounting hole 12 of the vehicle body panel 11 while inclining the female housing 51 with respect to the vehicle body panel 11, the guide rib 76 of the grommet 70 is brought into contact with the wall surface 11a of the vehicle body panel 11 prior to the waterproof lip 75 of the panel close contact portion 71. After the female housing 51 is assembled to the mounting hole 12 of the vehicle body panel 11, the guide rib 76 is not brought into contact with the wall surface 11a of the vehicle body panel 11. Accordingly, by preventing catching of the waterproof lip 75 of the grommet 70 at the time of assembling the female housing 51 to the vehicle body panel 11 while inclining the female housing 51 with respect to the vehicle body panel 11, it is possible to ensure the assembling property of the female housing 51 and the waterproofness of the mounting hole 12 of the vehicle body panel 11 by the grommet 70.

Particularly, as illustrated in FIG. 17, the contact angle θ1 between the waterproof lip 75 of the panel close contact portion 71 and the vehicle body panel 11 is larger than the contact angle θ2 between the guide rib 76 and the vehicle body panel 11 (θ1> θ2). Accordingly, when assembling the female housing 51 to the vehicle body panel 11 while inclining the female housing 51 with respect to the vehicle body panel 11, the waterproof lip 75 is brought into contact with the wall surface 11a of the vehicle body panel 11 perpendicularly. Accordingly, it is possible to further increase the waterproofness for the vehicle body panel 11.

Next, a comparison example will be described.

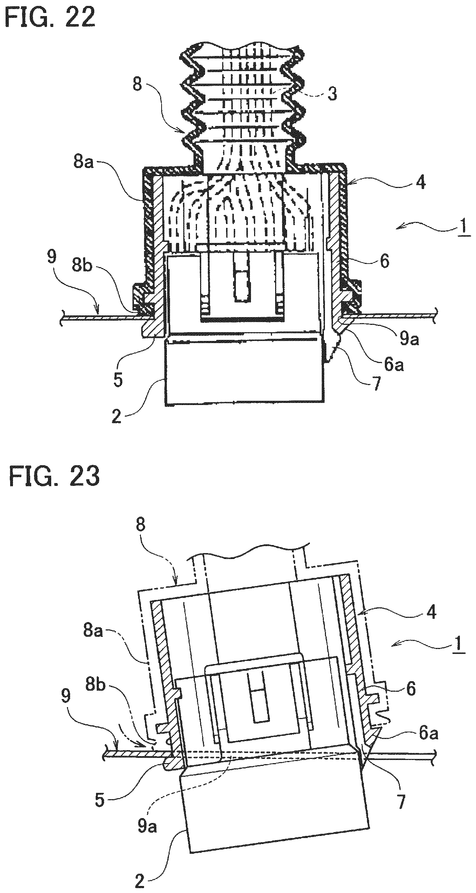

As illustrated in FIG. 22 and FIG. 23, the grommet-equipped connector 1 includes a connector housing 2, an inner sleeve 4, and a grommet 8. The connector housing 2 is connected to a distal end of a door harness 3. The inner sleeve 4 fixes the connector housing 2 in the inside thereof. The grommet 8 has a large-diameter cylindrical portion 8a. and accommodates the inner sleeve 4 in the large-diameter cylindrical portion 8a.

At the center of the distal end of the inner sleeve 4, a fixing lock claw 5 is provided so as to protrude outward. A movable piece 6 is disposed at the distal end of the inner sleeve 4 at a position opposedly facing the fixing lock claw 5. The movable piece 6 has a movable lock claw 6a on an outer side of the distal end of the movable piece 6. On an inner surface of the movable piece 6, a correction rib 7 protruding outward than the movable lock claw 6a is disposed.

At the time of assembling the grommet 8 housing the inner sleeve 4 in the large-diameter cylindrical portion 8a to the through hole 9a of the vehicle body panel 9, as illustrated in FIG. 23, the distal end surface of the inner sleeve 4 is inclined with respect to the through hole 9a, the fixing lock claw 5 of the inner sleeve 4 is first inserted into the through hole 9a, and the fixing lock claw 5 is locked to the peripheral edge of the through hole 9a. Next, the correction rib 7 of the inner sleeve 4 is inserted into the through hole 9a while the movable piece 6 of the inner sleeve 4 is bent inward. Since the fixing lock claw 5 is brought into a proper position by the correction rib 7, the movable lock claw 6a provided at the distal end of the movable piece 6 of the inner sleeve 4 can be inserted into the through hole 9a without hitting the vehicle body panel 9. Thereby, the movable lock claw 6a is locked to the peripheral edge of the through hole 9a.

In the grommet-equipped connector 1, after the fixing lock claw 5 of the inner sleeve 4 is first locked in the through hole 9a of the vehicle body panel 9. the movable lock claw 6a is locked in the through hole 9a, and the connector housing 2 is assembled to the vehicle body panel 9. Simultaneously with the assembling, the waterproof lip 8b provided at the distal end of the large-diameter cylindrical portion 8a of the grommet 8, is pressed to the vehicle body panel 9 to stop the invasion of water into the vehicle body through the through hole 9a.

However, when the connector housing 2 is inclined with respect to the vehicle body panel 11, the waterproof lip 8b of the grommet 8 may be caught in the through hole 9a side of the vehicle body panel 9. In this case, the waterproof lip 8b cannot be normally pressed to the vehicle body panel 9. Accordingly, the grommet-equipped connector 1 cannot acquire the waterproofness of the through hole 9a so that there is a possibility that water enters the vehicle body and short-circuiting occurs.

According to this embodiment, the lever-type connector is assembled to the vehicle body panel after the male connector engages with the female connector by fitting. However, assembling of the lever-type connector is not limited to such a case. For example, the male connector may engage with the female connector by fitting after the female connector is assembled to the vehicle body panel.

According to this embodiment, the female connector is formed of the female housing and the frame, and the cam groove is formed on the frame. However, the present invention is not limited to such a case. For example, the female connector may be formed of only the female housing, and the cam grooves may be formed on the female housing.

Although the present invention has been described above by reference to the embodiment, the present invention is not limited to those and the configuration of parts can be replaced with any configuration having a similar function, as long as they lie within the scope of the claims.

## Claims

1. A grommet-equipped connector comprising:
a housing including a panel hooking portion which is locked to an edge portion of a mounting hole of a panel by being hooked on the edge portion, a flange having an annular shape which faces the edge portion, and a locking projection which is locked to the panel in a state where the panel is sandwiched between the locking projection and the flange, wherein the panel hooking portion, the flange, and the locking projection are formed on an outer side of the housing; and
a grommet including a panel close contact portion which engages with the flange by fitting so as to cover the flange and has a waterproof lip which is brought into close contact with the edge portion, wherein
a guide rib projecting from the waterproof lip, is provided at a position of the panel close contact portion facing the panel hooking portion, and
the guide rib is configured to be brought into contact with a wall surface of the panel before the waterproof lip is brought into contact with the wall surface at the time of assembling the housing to the panel, by rotating the housing using the panel hooking portion as a fulcrum in a state where the panel hooking portion is hooked on the edge portion.

2. The grommet-equipped connector according to claim 1, wherein a contact angle between the waterproof lip and the panel is larger than a contact angle between the guide rib and the panel.

3. The grommet-equipped connector according to claim 1, wherein the guide rib is not brought into contact with the wall surface of the panel in a state where the housing is assembled to the mounting hole.
